# EUROPEAN PATENT SPECIFICATION

(11) **EP 2 871 727 B1**
(45) Date of publication and mention of the grant of the patent: **04.09.2019**
(21) Application number: 13827209.1
(22) Date of filing: 30.04.2013
(51) Int. Cl.: H01S 3/067, H01S 3/11, H01S 3/23, H01S 3/106, H01S 3/0941, H01S 3/117, H01S 3/131

(54) **FIBER LASER DEVICE**
FASERLASERVORRICHTUNG
DISPOSITIF DE LASER À FIBRES OPTIQUES

(30) Priority: 08.08.2012 JP 2012175681
(43) Date of publication of application: 13.05.2015
(73) Proprietor: Fujikura Ltd., Tokyo 135-8512 (JP)
(72) Inventor: OBA, Yasuhiro, Sakura-shi, Chiba 285-8550 (JP)
(74) Representative: Cabinet Plasseraud
(86) International application number: PCT/JP2013/062557
(87) International publication number: WO 2014/024526

(56) References cited:
- EP-A1- 2 164 140
- WO-A1-2009/001852
- WO-A1-2011/111560
- WO-A1-2011/118817
- JP-A- 2001 353 585
- JP-A- 2009 130 143
- JP-A- 2009 536 785
- JP-A- 2012 059 746
- JP-A- 2012 059 746
- US-A1- 2009 135 858

## Description

### Technical Field

The present invention relates to a fiber laser device that emits pulsed output light.

### Background Art

JP 2012 059746 A1 discloses a fiber laser device comprising a Q-switched seed light source and an amplifier wherein an amplitude and a frequency of the output light pulses can be adjusted by adjusting an amplitude and a frequency of the seed light pulses. The arrangement further comprises a control unit which controls an amplifier pumping light source so that the pulses emitted from the power amplifier have a constant peak power.

US 2009/135858 A1 discloses a Q-switched laser in which the pulse width can be adjusted by the time period for which the optical switch is in the non-transmission state.

A fiber laser device which amplifies signal light using a rare-earth-added fiber and emits the signal light has been used as one of laser devices used in, for example, processing machines for performing processing with laser light or medical equipment, such as a surgical knife using laser light. In some cases, in the fiber laser device, pulsed output light is emitted in order to increase the intensity of the emitted output light.

The following Patent Document 1 discloses this type of fiber laser device. The fiber laser device disclosed in Patent Document 1 includes an optical fiber to which a rare earth element is added and a laser diode which emits laser light for pumping the rare earth element. Light components with some wavelengths among the light components emitted from the rare earth element which is pumped by the laser light resonate in the optical fiber and some of the resonant light components are emitted. In the fiber laser device, the pulsed laser light emitted from the laser diode is incident as pumping light on the optical fiber and pulsed light is emitted from the optical fiber. Then, a pulsed voltage applied to the laser diode which emits the laser light is controlled to control the pulse width of light emitted from the optical fiber.

[Patent Document 1] JP-A-2011-134736

### Summary of Invention

### Objects to be Achieved by the Invention

In the fiber laser device disclosed in Patent Document 1, the pulsed voltage applied to the laser diode is controlled to control the intensity of laser light as pumping light which is incident on the optical fiber and the pulse width of light emitted from the optical fiber is determined on the basis of the pumped state of the optical fiber by the laser light. Specifically, when the intensity of the laser light increases, the level of the pumped state of the optical fiber increases and the time when the gain is greater than the loss of light which is propagated through the resonator increases. Therefore, the pulse width of the light emitted from the optical fiber increases.

However, it is necessary to accurately control the pumped state of the optical fiber in order to accurately control the pulse width of the light emitted from the fiber laser device using the above-mentioned method. In practice, it is difficult to accurately control the pumped state of the optical fiber due to the transient characteristics of the laser light emitted from the laser diode which is caused by, for example, the influence of the time constant of the laser diode. Therefore, it is difficult to accurately control the pulse width.

There is a demand for a technique which emits pulsed output light corresponding to only one pulse to test output light and adjusts the pulse width or intensity of the pulsed output light to be continuously emitted, on the basis of the test result of the output light, before the pulsed output light is continuously emitted from the fiber laser device. In this case, it is preferable that the pulse width of the output light when the output light corresponding to one pulse is emitted be substantially equal to the pulse width of the output light when the pulsed output light is continuously emitted. Therefore, a fiber laser device is preferable which can accurately control the pulse width of the light emitted from the optical fiber.

The invention has been made in view of the above-mentioned problems and an object of the invention is to provide a fiber laser device which can accurately control the pulse width of the emitted output light.

### Means for Achieving the Objects

The invention is defined in claim 1. Further embodiments are subject of the dependent claims.

A fiber laser device includes: a seed light source that includes a seed light generation pumping light source which emits seed light generation pumping light, a seed light generation optical fiber on which the seed light generation pumping light is incident and to which an active element that is pumped by the seed light generation pumping light is added, and an optical switch which is optically coupled to the seed light generation optical fiber and switches between a transmission state and a non-transmission state of light with a specific wavelength that is propagated through the seed light generation optical fiber, increases a level of a pumped state of the active element in the seed light generation optical fiber when the optical switch is in the non-transmission state, and emits pulsed seed light with the specific wavelength when the optical switch is in the transmission state; an amplifier that includes an amplification pumping light source which emits amplification pumping light and an amplification optical fiber on which the seed light and the amplification pumping light are incident and to which an active element that is pumped by the amplification pumping light is added, and amplifies the seed light; and a control unit that controls the seed light source and the amplifier. The control unit instructs the amplification pumping light source to emit the amplification pumping light in a state in which the seed light generation pumping light is emitted from the seed light generation pumping light source and the optical switch is in the transmission state. The control unit changes the optical switch from the transmission state to the non-transmission state, with the amplification pumping light being emitted from the amplification pumping light source, and changes the optical switch to the transmission state again when the seed light is emitted. The control unit performs control such that, as a pulse width of output light emitted from the amplifier is reduced, a period for which the optical switch is in the non-transmission state increases and controls the intensity of the amplification pumping light emitted from the amplification pumping light source such that the output light pulse has a predetermined peak intensity.

According to the above-mentioned fiber laser device, the period for which the optical switch of the seed light source is in the non-transmission state can be controlled to control the pumped state of the active element in the seed light generation optical fiber. That is, when the optical switch is in the non-transmission state, light with a specific wavelength which is propagated through the seed light generation optical fiber is blocked by the optical switch. Therefore, the level of the pumped state of the active element is increased by the seed light generation pumping light. When the optical switch is changed to the transmission state with the pumped state of the active element at a high level, the light with the specific wavelength which is propagated through the seed light generation optical fiber is amplified. It is possible to emit pulsed seed light with high intensity. Examples of the seed light source include a light source using a resonance-type fiber laser device and a light source using a fiber-ring-type fiber laser device. In the control process of emitting the pulsed seed light, when the period for which the optical switch is in the non-transmission state is long, the level of the pumped state of the active element is higher than that when the period for which the optical switch is in the non-transmission state is short. As a result, the pulse width of the seed light emitted from the seed light source is reduced. Then, the output light with a pulse width corresponding to the pulse width of the incident seed light is emitted from the amplifier on which the seed light is incident. As such, in the fiber laser device according to the invention, the period for which the optical switch is in the non-transmission state can be controlled to control the pulse width of the output light. A method for temporally control the optical switch can more accurately control the pulse width of the output light than a method for controlling the intensity of the seed light generation pumping light incident on the seed light generation optical fiber.

According to the fiber laser device of the invention, the intensity of the amplification pumping light emitted from the amplification pumping light source of the amplifier is controlled such that the output light emitted from the amplifier has the predetermined peak intensity. Therefore, according to the fiber laser device of the invention, it is possible to independently control the peak intensity and pulse width of the output light emitted from the amplifier.

As such, according to the structure which can independently control the pulse width and peak intensity of the output light, when the output light corresponding to only one pulse is emitted and tested before the pulsed output light is continuously emitted from the fiber laser device, the pulse width and peak intensity of the output light corresponding to one pulse can be substantially equal to those when the pulsed output light is continuously emitted. Therefore, when the pulsed output light is continuously emitted, it is possible to reflect the result of the test which emits the output light corresponding to only one pulse.

The control unit may change a period from a time when the amplification pumping light is emitted to a time when the optical switch is changed to the non-transmission state, depending on the pulse width of the output light emitted from the amplifier, and may set a period from the time when the amplification pumping light is emitted to a time when the optical switch is changed to the transmission state again to be constant.

Since the optical switch is controlled in this way, the time when the seed light is emitted can be substantially constant, regardless of the pulse width of the seed light. Therefore, the time when the output light is emitted can be substantially constant, regardless of the pulse width of the output light. As described above, the control unit controls the seed light source such that, as the pulse width of the output light emitted from the amplifier decreases, the period for which the optical switch is in the non-transmission state becomes longer. Therefore, the control unit controls the seed light source such that, as the pulse width of the output light decreases, the period from the time when the amplification pumping light is emitted to the time when the optical switch is changed to the non-transmission state becomes shorter.

Alternatively, the control unit may set a period from a time when the amplification pumping light is emitted to a time when the optical switch is changed to the non-transmission state to be constant and may change a period from the time when the amplification pumping light is emitted to a time when the optical switch is changed to the transmission state again, depending on the pulse width of the output light emitted from the amplifier.

In accordance with the invention, the control unit controls the amplification pumping light source such that, as the period for which the optical switch is in the non-transmission state becomes shorter, the level of the pumped state of the active element in the amplification optical fiber when the seed light is incident on the amplification optical fiber increases.

As described above, as the period for which the optical switch is in the non-transmission state becomes shorter, the pulse width of the seed light emitted from the seed light source increases. However, in a case in which the active element in the amplification optical fiber amplifying the seed light is in the same pumped state, as the pulse width of the seed light decreases, the peak intensity of the emitted output light increases. As the pulse width of the seed light increases, the peak intensity of the emitted output light decreases. However, according to the above-mentioned structure, as the period for which the optical switch is in the non-transmission state becomes shorter and the pulse width of the seed light increases, the level of the pumped state of the active element in the amplification optical fiber increases. Therefore, it is possible to suppress a variation in the peak intensity of the output light emitted from the amplifier due to the pulse width of the seed light. As a result, it is possible to accurately control the pulse width of the output light and to stably control the peak intensity of the output light.

As such, when the control unit controls the amplification pumping light source such that, as the period for which the optical switch is in the non-transmission state becomes shorter, the level of the pumped state of the active element in the amplification optical fiber when the seed light is incident on the amplification optical fiber increases, the control unit preferably controls the amplification pumping light source such that, as the period for which the optical switch is in the non-transmission state becomes shorter, the intensity of the amplification pumping light increases.

The above-mentioned control process makes it possible to increase the level of the pumped state of the active element in the amplification optical fiber when the seed light is incident on the amplification optical fiber. In particular, as described above, when the control unit sets the period from the time when the amplification pumping light is emitted to the time when the optical switch is changed to the non-transmission state to be constant, the emission time of the seed light is advanced due to the control process which is performed such that, as the pulse width of the seed light to be emitted increases, the period for which the optical switch is in the transmission state becomes shorter, and the time for which the active element in the amplification optical fiber is pumped is shortened. As such, as the pulse width of the seed light to be emitted increases, the peak intensity of the output light is less likely to increase as described above, even though the time for which the active element in the amplification optical fiber is pumped is shortened. However, according to the above-mentioned structure in which the amplification pumping light source is controlled such that, as the period for which the optical switch is in the non-transmission state becomes shorter, the intensity of the amplification pumping light increases and the level of the pumped state of the active element in the amplification optical fiber increases, it is possible to suppress a variation in the peak intensity of the output light emitted from the amplifier.

Alternatively, when the control unit controls the amplification pumping light source such that, as the period for which the optical switch is in the non-transmission state becomes shorter, the level of the pumped state of the active element in the amplification optical fiber when the seed light is incident on the amplification optical fiber increases, the control unit may control the amplification pumping light source such that idling light which has the same wavelength as the amplification pumping light has a lower intensity than the amplification pumping light and is incident on the amplification optical fiber is emitted from the amplification pumping light source before the amplification pumping light is emitted and the intensity of the idling light increases as the period for which the optical switch is in the non-transmission state becomes shorter.

In the amplifier using the amplification optical fiber to which the active element is added, in some cases, in order to advance the emission time of the output light, the idling light with intensity that is lower than that of the amplification pumping light and does not cause oscillation due to ASE light is incident on the amplification optical fiber and pre-pumps the active element in the amplification optical fiber. In this case, it is possible to increase the rate of change of the pumped state of the amplification optical fiber when the amplification pumping light is incident by increasing the intensity of the idling light to increase the level of the pre-pumped state. According to this structure in which, as the pulse width of the seed light increases, the rate of change of the pumped state of the amplification optical fiber when the amplification pumping light is incident increases, even when the amplification pumping light with the same intensity is incident regardless of the intensity of the seed light, it is possible to increase the level of the pumped state of the active element in the amplification optical fiber and to suppress a variation in the peak intensity of the output light.

Alternatively, the control unit may lengthen a period from a time when the amplification pumping light is emitted to a time when the optical switch is changed to the non-transmission state and lengthen a period from the time when the amplification pumping light is emitted to a time when the optical switch is changed to the transmission state again such that, as the period for which the optical switch is in the non-transmission state becomes shorter, the level of the pumped state of the active element in the amplification optical fiber when the seed light is incident on the amplification optical fiber increases.

The above-mentioned control process makes it possible to lengthen the period for which the active element in the amplification optical fiber is pumped as the pulse width of the seed light increases. Therefore, as the pulse width of the seed light to be emitted increases, the level of the pumped state of the active element in the amplification optical fiber increases. As a result, it is possible to suppress a variation in the gain of the amplifier.

The fiber laser device may further include a light detection unit that is provided between the seed light source and the amplifier and detects the intensity of light which travels from the amplifier to the seed light source. The control unit may control the intensity of the amplification pumping light on the basis of the intensity of the light detected by the light detection unit such that the active element in the amplification optical fiber is in a desired pumped state when the seed light is incident on the amplification optical fiber.

The intensity of the light which travels from the amplifier to the seed light source is detected between the seed light source and the amplifier. According to this structure, it is possible to detect the intensity of the ASE light emitted from the amplification optical fiber and to check the pumped state of the active element in the amplification optical fiber on the basis of the detection result. Therefore, it is possible to accurately control the intensity of the amplification pumping light emitted from the amplification pumping light source on the basis of the pumped state of the active element in the amplification optical fiber. For example, as described above, when the amplification pumping light source is controlled such that, as the period for which the optical switch is in the non-transmission state becomes shorter, the level of the pumped state of the active element in the amplification optical fiber when the seed light is incident on the amplification optical fiber increases, it is possible to accurately increase the intensity of the amplification pumping light and to suppress a variation in the peak intensity of the emitted output light due to the pulse width of the seed light.

The fiber laser device may further include a light detection unit that is provided between the seed light source and the amplifier and detects the intensity of light which travels from the amplifier to the seed light source. The control unit may change the optical switch to the non-transmission state when the intensity of the light detected by the light detection unit has a predetermined value corresponding to the pulse width of the emitted seed light.

As described above, when the intensity of the light which travels from the amplifier to the seed light source is detected between the seed light source and the amplifier, it is possible to check the pumped state of the active element in the amplification optical fiber. According to the above-mentioned control process, it is possible to substantially check the pumped state of the active element in the amplification optical fiber at the time when the seed light is emitted and the seed light can be incident on the amplification optical fiber in the desired pumped state. Therefore, even in a situation in which the level of the pumped state is less likely to increase due to the surrounding environment of the fiber laser device, it is possible to emit output light with desired peak intensity.

The fiber laser device may further include: a wavelength converter that is provided between the seed light source and the amplifier, does not convert a wavelength of light emitted from the seed light source for a period for which the pulsed seed light is not emitted, and converts a wavelength of the pulsed seed light for the period; and an optical filter that is provided between the wavelength converter and the amplifier, transmits the light whose wavelength has been converted by the wavelength converter among light components emitted from the seed light source and suppresses the transmission of light whose wavelength has not been converted by the wavelength converter.

Continuous light with low intensity tends to be emitted from the seed light source, which emits pulsed seed light using the optical switch, between seed light components, as in the invention. However, according to the above-mentioned structure, the wavelength of the continuous light is not converted and the incidence of the continuous light on the amplifier is suppressed by the optical filter. Therefore, it is possible to suppress the emission of unnecessary continuous light between pulses.

### Effect of Invention

As described above, according to the invention, it is possible to provide a fiber laser device that can accurately control the pulse width of the emitted output light.

### Brief Description of Drawings

FIG. 1 is a diagram illustrating a fiber laser device according to the invention.
FIG. 2 is a timing chart schematically illustrating a basic operation of the fiber laser device illustrated in FIG. 1.
FIG. 3 is a diagram illustrating a timing chart when output light has a large pulse width and when the output light has a small pulse width.
FIG. 4 is a diagram illustrating another timing chart when the output light has a large pulse width and when the output light has a small pulse width.
FIG. 5 is a diagram illustrating still another timing chart when the output light has a large pulse width and when the output light has a small pulse width.

### Description of Embodiments

Hereinafter, a preferred embodiment of a fiber laser device according to the invention will be described in detail with reference to the drawings.

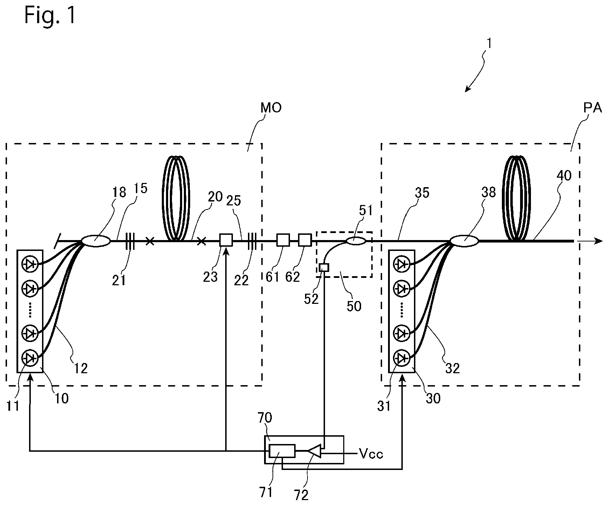

FIG. 1 is a diagram illustrating the fiber laser device according to the invention.

As illustrated in FIG. 1, a fiber laser device 1 includes, as main components, a seed light source MO that emits seed light, an amplifier PA that amplifies the seed light emitted from the seed light source MO, a wavelength converter 61 that is provided between the seed light source MO and the amplifier PA, an optical filter 62 that is provided between the wavelength converter 61 and the amplifier PA, a light detection unit 50 that is provided between the seed light source MO and the amplifier PA, and a control unit 70 that controls the seed light source MO and the amplifier PA. As such, the fiber laser device 1 is a so-called MO-PA fiber laser device in which the seed light source MO is a master oscillator and the amplifier PA is a power amplifier.

### <Structure of Seed Light Source MO>

The seed light source MO includes, as main components, a seed light generation pumping light source 10 that emits seed light generation pumping light, a seed light generation optical fiber 20 on which the seed light generation pumping light emitted from the seed light generation pumping light source 10 is incident and to which an active element that is pumped by the seed light generation pumping light is added, a first optical fiber 15 that is connected to one end of the seed light generation optical fiber 20, a first fiber bragg grating (FBG) 21 that is provided as a first mirror in the first optical fiber 15, a combiner 18 that enters the seed light generation pumping light in the first optical fiber 15, a second optical fiber 25 that is connected to the other end of the seed light generation optical fiber 20, a second FBG 22 that is provided as a second mirror in the second optical fiber 25, and an optical switch 23 that is provided between the first FBG 21 and the second FBG 22. As such, the seed light source MO is a resonator-type fiber laser device.

The seed light generation pumping light source 10 includes a plurality of laser diodes 11 and outputs the seed light generation pumping light with a wavelength which can pump the active element added to the seed light generation optical fiber 20, for example, a wavelength of 915 nm. That is, the seed light generation pumping light is pumping light that pumps the active element of the seed light generation optical fiber 20. In this embodiment, the pumping light is continuous light. Each laser diode 11 in the seed light generation pumping light source 10 is connected to an optical fiber 12. Light emitted from the laser diode 11 is propagated through the optical fiber 12. An example of the optical fiber 12 is a multi-mode fiber. In this case, the seed light generation pumping light is propagated as multi-mode light through the optical fiber 12.

The seed light generation optical fiber 20 includes a core, a cladding that closely surrounds an outer circumferential surface of the core, a resin cladding that covers an outer circumferential surface of the cladding, and a covering layer that covers an outer circumferential surface of the resin cladding. Examples of a material forming the core of the seed light generation optical fiber 20 include an element, such as germanium that increases a refractive index, and quartz to which an active element, such as ytterbium (Yb) pumped by light for generating seed light that is emitted from the seed light generation pumping light source 10, is added. An example of the active element is a rare earth element. Examples of the rare earth element include Yb, thulium (Tm), cerium (Ce), neodymium (Nd), europium (Eu), and erbium (Er). In addition to the rare earth element, bismuth (Bi) is given as an example of the active element. An example of a material forming the cladding of the seed light generation optical fiber 20 is undoped pure quartz. In addition, an example of a material forming the resin cladding of the seed light generation optical fiber 20 is an ultraviolet curable resin. An example of a material forming the covering layer of the seed light generation optical fiber 20 is an ultraviolet curable resin different from the resin forming the resin cladding.

The first optical fiber 15 is an optical fiber in which the diameter of a core is equal to that of the core of the seed light generation optical fiber 20 and the outside diameter of a cladding is equal to that of the cladding of the seed light generation optical fiber 20 and is, for example, a single-mode fiber. The first optical fiber 15 is connected to the seed light generation optical fiber 20 such that the central axis of the core is aligned with the central axis of the core of the seed light generation optical fiber 20. Therefore, the core of the seed light generation optical fiber 20 is optically coupled to the core of the first optical fiber 15 and the cladding of the seed light generation optical fiber 20 is optically coupled to the cladding of the first optical fiber 15. In the combiner 18, the core of the optical fiber 12 is connected to the cladding of the first optical fiber 15. In this way, the optical fibers 12 connected to the seed light generation pumping light source 10 are optically coupled to the seed light generation optical fiber 20 through the first optical fiber 15.

The first FBG 21 is provided in the core of the first optical fiber 15. The first FBG 21 is provided at one end of the seed light generation optical fiber 20. The first FBG 21 is configured such that portions with a high refractive index are repeated in a predetermined cycle along the longitudinal direction of the first optical fiber 15 and the cycle is adjusted to reflect a light component with a specific wavelength in the light emitted from the active element of the seed light generation optical fiber 20 in a pumped state. As described above, when the active element added to the seed light generation optical fiber 20 is ytterbium, the reflectance of the first FBG 21 with respect to light with a wavelength of, for example, 1070 nm is, for example, 100%.

The second optical fiber 25 has a core having the same diameter as the seed light generation optical fiber 20. The axis of the second optical fiber 25 is aligned with the axis of the seed light generation optical fiber 20 and the second optical fiber 25 is connected to the other end of the seed light generation optical fiber 20. Therefore, the core of the seed light generation optical fiber 20 is optically coupled to the core of the second optical fiber 25.

The second FBG 22 is provided in the core of the second optical fiber 25. The second FBG 22 is provided at the other end of the seed light generation optical fiber 20. The second FBG 22 is configured such that portions with a high refractive index are repeated in a predetermined cycle along the longitudinal direction of the second optical fiber 25 and reflects light having the same wavelength as the light reflected by the first FBG 21 at a reflectance which is less than that of the first FBG 21. For example, the second FBG 22 is configured so as to reflect light having the same wavelength as the light reflected by the first FBG 21 at a reflectance of 50%.

The optical switch 23 is provided in the second optical fiber 25 and is controlled so as to be repeatedly turned on and off. When the optical switch 23 is in an on state (transmission state), the loss of light with the wavelength reflected by the first FBG 21 and the second FBG 22 is low. In this state, almost all of the light components incident on the optical switch 23 pass through the optical switch 23. On the other hand, when the optical switch 23 is in an off state (non-transmission state), the loss of the light with the wavelength reflected by the first FBG 21 and the second FBG 22 is high. In this state, most of light components with specific wavelengths which are reflected by the first FBG 21 and the second FBG 22 among the light components incident on the optical switch 23 are lost. Examples of the optical switch 23 can include an acoustic optical modulator (AOM), a micromachine-type optical switch, and an LN modulator.

### <Structure of Amplifier PA>

The amplifier PA includes, as main components, an incidence optical fiber 35 that is connected to the second optical fiber 25 of the seed light source MO, an amplification pumping light source 30 that emits amplification pumping light, an amplification optical fiber 40 on which the seed light emitted from the seed light source MO and the amplification pumping light emitted from the amplification pumping light source 30 are incident, and a combiner 38 that enters the seed light and the amplification pumping light in the amplification optical fiber 40.

The incidence optical fiber 35 has the same structure as the second optical fiber 25 of the seed light source MO. The core of the second optical fiber 25 is optically coupled to the core of the incidence optical fiber 35 through the wavelength converter 61 and the optical filter 62.

The amplification pumping light source 30 includes a plurality of laser diodes 31 and emits pumping light with a wavelength that pumps an active element added to the amplification optical fiber 40 (which will be described below), for example, pumping light with a wavelength of 915 nm. Each laser diode 31 of the amplification pumping light source 30 is connected to an optical fiber 32. The amplification pumping light emitted from the laser diode 31 is propagated through the optical fiber 32. An example of the optical fiber 32 is a multi-mode fiber. In this case, the amplification pumping light is propagated as multi-mode light through the optical fiber 32.

The amplification optical fiber 40 has substantially the same structure of the seed light generation optical fiber 20 of the seed light source MO. However, the amplification optical fiber 40 may differ from the seed light generation optical fiber 20 in a length, the diameter of each component, and the type of dopant added. In the amplification optical fiber 40, simulated emission occurs in the active element which is pumped by the amplification pumping light due to light propagated through the core. In this way, the amplification optical fiber 40 amplifies the light propagated through the core.

The combiner 38 connects the incidence optical fiber 35 and the optical fibers 32 to an incident end of the amplification optical fiber 40. Specifically, in the combiner 38, the core of the incidence optical fiber 35 is connected to the core of the amplification optical fiber 40 and the core of each of the optical fibers 32 is connected to the cladding of the amplification optical fiber 40. Therefore, the seed light emitted from the seed light source MO is incident on the core of the amplification optical fiber 40 and is propagated through the core. The amplification pumping light emitted from the amplification pumping light source 30 is incident on the cladding of the amplification optical fiber 40 and is mainly propagated through the cladding. Therefore, the seed light that is propagated through the amplification optical fiber 40 is amplified as described above and is then emitted from the amplification optical fiber 40.

### <Other structures>

When the intensity of incident light is greater than a predetermined value, the wavelength converter 61 converts the incident light into light with a wavelength greater than that of the incident light and emits the converted light. When the intensity of the incident light is less than the predetermined value, the wavelength converter 61 emits the incident light, without converting the wavelength of the incident light.

An optical fiber which generates simulated Raman scattering can be given as an example of the wavelength converter 61. An example of the optical fiber which generates the simulated Raman scattering is an optical fiber having a core to which a dopant for increasing a nonlinear optical constant is added. Examples of the dopant include germanium and phosphorus. The threshold value of the intensity of the light whose wavelength is converted by the wavelength converter 61 can be changed depending on, for example, the diameter of the core, the concentration of the dopant added, and a length.

The light emitted from the seed light source MO is incident on the optical filter 62 through the wavelength converter 61. When the light whose wavelength has been converted by the wavelength converter 61 is incident, the optical filter 62 transmits the light. When the light whose wavelength has not been converted by the wavelength converter 61 is incident on the optical filter 62, the transmission of the light is suppressed and the light is extinguished. Therefore, when light with high intensity is emitted from the seed light source MO and the wavelength of the light is converted by the wavelength converter 61, the light which is incident on the optical filter 62 is transmitted through the optical filter 62. On the other hand, when light with low intensity is emitted from the seed light source MO and the wavelength of the light is not converted by the wavelength converter 61, the transmission of the light, which is incident on the optical filter 62, through the optical filter 62 is suppressed. A dielectric multi-layer filter can be given as an example of the optical filter 62.

The light detection unit 50 includes a light separation unit 51 that is provided halfway in the incidence optical fiber 35 and a photoelectric conversion unit 52 that converts the intensity of light separated by the light separation unit 51 into an electric signal. The light separation unit 51 is, for example, an optical coupler and separates a portion of light which travels from the amplifier PA to the seed light source MO so as to be incident on the photoelectric conversion unit 52. Therefore, the light detection unit 50 can detect the intensity of ASE light which is generated in the amplification optical fiber 40 of the amplifier PA and is then emitted to the seed light source MO. In addition, the photoelectric conversion unit 52 is, for example, a photoelectric conversion element, such as a photodiode, performs photoelectric conversion on light which is incident from the light separation unit 51, and outputs an electric signal based on the intensity of the light incident from the light separation unit 51 to the control unit 70.

The control unit 70 includes a light source control unit 71 and a comparator 72 that compares the voltage of the signal input from the photoelectric conversion unit 52 with a reference voltage. The comparator 72 compares the signal input from the photoelectric conversion unit 52 with the reference voltage and outputs a signal indicating the comparison result to the light source control unit 71. The light source control unit 71 includes, for example, a logic gate or a central processing unit (CPU) and generates a control signal on the basis of the signal from the comparator 72. The generated control signal is input to the seed light generation pumping light source 10 or the optical switch 23 of the seed light source MO and the amplification pumping light source 30 of the amplifier PA. The seed light generation pumping light source 10 mainly controls whether to emit the seed light generation pumping light and the optical switch 23 mainly controls a switching operation. The amplification pumping light source 30 mainly controls whether to emit the amplification pumping light or the intensity of the amplification pumping light to be emitted.

Next, the operation of the fiber laser device 1 will be described.

### <Basic Operation>

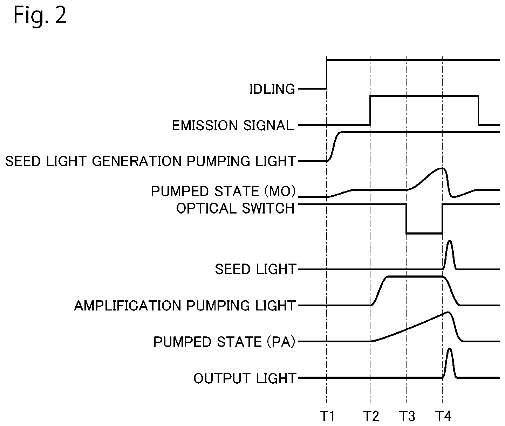

FIG. 2 is a timing chart schematically illustrating the basic operation of the fiber laser device 1 illustrated in FIG. 1. Specifically, FIG. 2 illustrates the idling state of the fiber laser device 1, the state of an emission signal for emitting output light, the intensity of the seed light generation pumping light emitted from the seed light generation pumping light source 10, the pumped state (MO) of the active element in the seed light generation optical fiber 20 of the seed light source MO, the on/off states of the optical switch 23, the intensity of the seed light emitted from the seed light source MO, the intensity of the amplification pumping light emitted from the amplification pumping light source 30 of the amplifier PA, the pumped state (PA) of the active element in the amplification optical fiber 40 of the amplifier PA, and the intensity of the output light emitted from the fiber laser device 1.

In FIG. 2, a high level of the idling state indicates that the fiber laser device 1 is in the idling state. A high level of the emission signal indicates that the emission signal is in an on state. A high level of the seed light generation pumping light indicates that the intensity of the seed light generation pumping light emitted from the seed light generation pumping light source 10 is high. A high level of the pumped state (MO) indicates that the level of the pumped state of the active element in the seed light generation optical fiber 20 of the seed light source MO is high. A high-level state of the optical switch 23 indicates the on state of the optical switch 23. A high level of the seed light indicates that the intensity of the seed light emitted from the seed light source MO is high. A high level of the amplification pumping light indicates that the intensity of the amplification pumping light emitted from the amplification pumping light source 30 of the amplifier PA is high. A high level of the pumped state (PA) indicates that the level of the pumped state of the active element in the amplification optical fiber 40 of the amplifier PA is high. A high level of the output light indicates that the intensity of the output light emitted from the fiber laser device 1 is high. In addition, in FIG. 2, the seed light generation pumping light and the amplification pumping light have the same level and the peaks of the seed light and the output light have the same level. However, in FIG. 2, since the states of the light components are schematically illustrated, the seed light generation pumping light and the amplification pumping light which are actually emitted do not have the same intensity and the seed light and the output light which are actually emitted do not have the same intensity.

First, when an idling switch (not illustrated) of the fiber laser device 1 is turned on at a time T1 in a state in which the fiber laser device 1 can operate, the fiber laser device 1 changes to the idling state.

When the fiber laser device 1 changes to the idling state, the control unit 70 controls the seed light generation pumping light source 10 of the seed light source MO such that the seed light generation pumping light is emitted. The seed light generation pumping light starts to be emitted from the seed light generation pumping light source 10 and the intensity of the seed light generation pumping light rapidly increases to a sufficiently high level. When the seed light generation pumping light is incident on the seed light generation optical fiber 20, the level of the pumped state of the active element in the seed light generation optical fiber 20 increases gradually. When the level of the pumped state of the active element added to the seed light generation optical fiber 20 increases, ASE light is emitted from the active element in the seed light generation optical fiber 20. The ASE light is light that has low peak intensity and a wide wavelength band. As illustrated in FIG. 2, the optical switch 23 is turned on in a normal state. Therefore, almost all of the light components which are incident on the optical switch 23 pass through the optical switch 23. Then, light components with a specific wavelength which are reflected by the first FBG 21 and the second FBG 22 among the ASE light components resonate between the first FBG 21 and the second FBG 22 having the seed light generation optical fiber 20 interposed therebetween. Some light components are emitted from the second FBG 22 and are emitted from the second optical fiber 25 of the seed light source MO. The emitted light is not naturally amplified since the level of the pumped state of the active element added to the seed light generation optical fiber 20 is not very high and becomes continuous light with low intensity. As such, when the optical switch 23 is in the on state, the pumped state of the active element in the seed light generation optical fiber 20 is maintained at a level that is not very high due to resonant light.

In this case, since the intensity of the continuous light emitted from the seed light source MO is low as described above, the wavelength of the continuous light is not converted by the wavelength converter 61. Therefore, in this case, the light emitted from the wavelength converter 61 does not pass through the optical filter 62 and is extinguished.

Then, at a time T2, the control unit 70 turns on the emission signal. An emission switch (not illustrated) provided in the fiber laser device 1 may be turned on to turn on the emission signal or the control unit 70 may automatically turn on the emission signal. For example, when pulsed output light corresponding to only one pulse is emitted, the emission signal is turned on in response to the on signal of the emission switch provided in the fiber laser device 1. When the pulsed output light is continuously emitted, the emission signal is automatically turned on by a program of the control unit 70 at the interval of the emitted output light in the control unit 70, as described above.

When the emission signal is turned on, the control unit 70 controls the amplification pumping light source 30 of the amplifier PA such that the amplification pumping light is emitted from the amplification pumping light source 30. When the amplification pumping light starts to be emitted from the amplification pumping light source 30, the intensity of the amplification pumping light rapidly increases to a sufficiently high level. The emitted amplification pumping light is absorbed by the active element added to the amplification optical fiber 40 and the level of the pumped state of the active element in the amplification optical fiber 40 increases gradually.

Then, at a time T3 after the lapse of a predetermined period of time from the time T2, the control unit 70 turns off the optical switch 23. Then, light with a specific wavelength which resonates in the seed light generation optical fiber 20 until that time is lost in the optical switch 23. Therefore, the light resonance operation of the seed light generation optical fiber 20 is stopped. When the light resonance operation is stopped, the level of the pumped state of the active element in the seed light generation optical fiber 20 further increases. During that time, the level of the pumped state of the active element in the amplification optical fiber 40 of the amplifier PA continues to increase gradually as long as it is not saturated.

Then, at a time T4 after the lapse of a predetermined period of time from the time T3, the control unit 70 turns on the optical switch 23 again. Then, light with a specific wavelength resonates again in the seed light generation optical fiber 20 interposed between the first FBG 21 and the second FBG 22. In this case, since the pumped state of the active element in the seed light generation optical fiber 20 is at a high level for the period for which the optical switch 23 is in the off state, the resonant light is amplified into light with high intensity. Then, the amplified light passes through the second FBG 22 and is emitted as the pulsed seed light illustrated in FIG. 2 from the second optical fiber 25 of the seed light source MO.

The seed light emitted from the seed light source MO is converted into light with a long wavelength by the wavelength converter 61 since it has high intensity and is then emitted from the wavelength converter 61. The seed light emitted from the wavelength converter 61 passes through the optical filter 62.

Then, the seed light is incident on the amplifier PA from the incidence optical fiber 35. In this case, as illustrated in FIG. 2, the active element in the amplification optical fiber 40 is in the pumped state with an appropriately high level. Then, the seed light incident on the amplifier PA is propagated through the core of the amplification optical fiber 40. Simulated emission occurs in the active element in the amplification optical fiber 40 which is in the pumped state due to the seed light propagated through the core. The seed light is amplified by the simulated emission and the amplified seed light is emitted as output light from the amplification optical fiber 40. Then, the output light is emitted from the fiber laser device 1.

Then, the emission signal is turned off. When only one pulse of the output light is emitted, the emission signal is maintained in the off state until the next operation is performed. On the other hand, when the pulsed output light is continuously emitted, the emission signal is turned on again according to the emission cycle of the output light.

In the process of pumping the active element in the amplification optical fiber 40 of the amplifier PA, the intensity of the amplification pumping light emitted from the amplification pumping light source 30 may be adjusted while the pumped state of the active element is being monitored. This adjustment is performed as follows. That is, when the level of the pumped state of the active element in the amplification optical fiber 40 is high, ASE light is generated. The ASE light is continuously generated as long as light emitted from the seed light source MO is not incident on the amplification optical fiber 40 and is emitted from both ends of the amplification optical fiber 40. Therefore, the ASE light which is emitted from the incident end of the amplification optical fiber 40 is incident on the incidence optical fiber 35. Then, at least a portion of the ASE light which is propagated from the amplifier PA to the seed light source MO through the incidence optical fiber 35 is separated by the light separation unit 51 of the light detection unit 50 and is incident on the photoelectric conversion unit 52. The photoelectric conversion unit 52 outputs a signal based on the intensity of the light incident from the light separation unit 51 to the control unit 70.

When the signal is input from the photoelectric conversion unit 52 to the control unit 70, the comparator 72 compares the voltage of the signal with a reference voltage Vcc. When the intensity of the light incident on the light separation unit 51 is low and the voltage of the signal output from the photoelectric conversion unit 52 is lower than the reference voltage Vcc, the comparator 72 outputs a signal indicating that the voltage of the signal from the photoelectric conversion unit 52 is low to the light source control unit 71. For example, the signal becomes a low-voltage signal. In this case, the light source control unit 71 determines that the intensity of the ASE light emitted from the amplification optical fiber 40 is low and the level of the pumped state of the active element in the amplification optical fiber 40 is low and controls the amplification pumping light source 30 such that the intensity of the amplification pumping light emitted from the amplification pumping light source 30 increases.

On the other hand, when the intensity of the light incident on the light separation unit 51 is high and the voltage of the signal output from the photoelectric conversion unit 52 is higher than the reference voltage Vcc, the comparator 72 outputs a signal indicating that the voltage of the signal from the photoelectric conversion unit 52 is high to the light source control unit 71. For example, the signal becomes a high-voltage signal. In this case, the light source control unit 71 determines that the intensity of the ASE light emitted from the amplification optical fiber 40 is high and the level of the pumped state of the active element in the amplification optical fiber 40 is high, and controls the amplification pumping light source 30 such that the intensity of the amplification pumping light emitted from the amplification pumping light source 30 decreases.

As such, the reference voltage Vcc is set, the intensity of the ASE light emitted from the amplification optical fiber 40 is monitored, and the intensity of the amplification pumping light is adjusted according to the intensity of the ASE light. Therefore, when the seed light is incident, the active element in the amplification optical fiber 40 can be changed to a desired pumped state. In addition, when the ASE light is monitored in this way, it is possible to prevent the occurrence of oscillation in the amplification optical fiber 40 due to the excessive pumping of the active element in the amplification optical fiber 40.

### <Operation for Controlling Pulse Width>

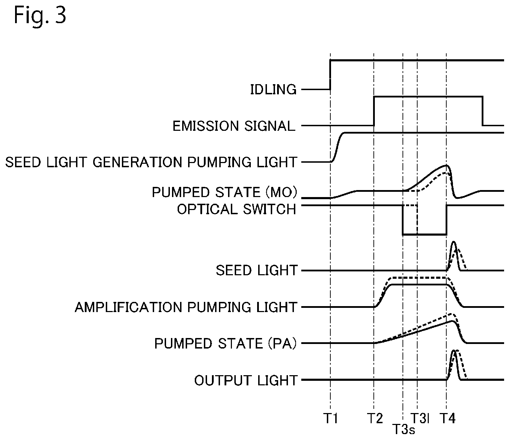

Next, the operation of the fiber laser device 1 controlling the pulse width of the emitted output light will be described with reference to FIG. 3. In the invention, in some cases, the description of the same content as that described with reference to FIG. 2 will not be repeated.

FIG. 3 is a diagram illustrating timing charts when the pulse width of the output light emitted from the fiber laser device 1 is large and when the pulse width is small using the same method as that illustrated in FIG. 2. Among the timing charts which are different when the pulse width of the output light is large and when the pulse width of the output light is small, the timing chart when the pulse width of the output light is large is represented by a dashed line. In FIG. 3, a time T31 indicates the time at which the optical switch 23 is turned off when the pulse width of the output light is large and a time T3s indicates the time at which the optical switch 23 is turned off when the pulse width of the output light is small. The time T31 and the time T3s correspond to the above-mentioned time T3.

As illustrated in FIG. 3, when the fiber laser device 1 is in the idling state, the control unit 70 performs control such that the seed light generation pumping light is emitted from the seed light generation pumping light source 10 and the level of the pumped state of the active element added to the seed light generation optical fiber 20 increases gradually. However, similarly to the description using FIG. 2, the level of the pumped state of the active element added to the seed light generation optical fiber 20 is not very high as long as the optical switch 23 is not turned off.

Then, at a time T2, when the control unit 70 turns on the emission signal, the amplification pumping light is emitted from the amplification pumping light source 30 under the control of the control unit 70. In this case, when the pulse width of the output light is increased, amplification pumping light with a higher intensity than that when the pulse width of the output light is decreased is emitted, considering a change in the peak intensity of the output light due to the pulse width of the seed light, which will be described below. The emitted amplification pumping light is absorbed by the active element added to the amplification optical fiber 40. Therefore, when the pulse width of the output light is increased, the level of the pumped state of the active element in the amplification optical fiber 40 is higher than that when the pulse width of the output light is decreased.

After a predetermined period of time has elapsed from the time T2, the control unit 70 turns off the optical switch 23. The control unit 70 turns off the optical switch 23 at different times when the pulse width of the output light is large and when the pulse width of the output light is small. Specifically, the control unit 70 sets the time T31 at which the optical switch 23 is turned off when the pulse width of the output light is increased to be later than the time T3s at which the optical switch 23 is turned off when the pulse width of the output light is decreased.

When the optical switch 23 is turned off, the level of the pumped state of the active element in the seed light generation optical fiber 20 further increases. However, as described above, when the pulse width of the output light is increased, the time at which the optical switch 23 is turned off is later than that when the pulse width of the output light is decreased. Therefore, when the pulse width of the output light is increased, the level of the pumped state of the active element in the seed light generation optical fiber 20 is lower than that when the pulse width of the output light is decreased, at a specific time of the period for which the optical switch 23 is in the off state.

The control unit 70 turns on the optical switch 23 again at the same time T4 when the pulse width of the output light is increased and when the pulse width of the output light is decreased. When the optical switch 23 is turned on, light with a specific wavelength resonates in the seed light generation optical fiber 20. The resonant light is amplified and seed light is emitted. In this case, as the level of the pumped state of the active element decreases, seed light with a larger pulse width is emitted. As the level of the pumped state of the active element increases, seed light with a smaller pulse width is emitted. That is, as the period for which the optical switch 23 is turned off becomes shorter, seed light with a larger pulse width is emitted from the second optical fiber 25 of the seed light source MO. As the period for which the optical switch 23 is turned off becomes longer, seed light with a smaller pulse width is emitted from the second optical fiber 25 of the seed light source MO.

The pulsed seed light emitted from the seed light source MO is incident on the amplifier PA from the incidence optical fiber 35 through the wavelength converter 61 and the optical filter 62. In this case, in this operation, as illustrated in FIG. 3, when the pulse width of the output light is increased, the level of the active element in the amplification optical fiber 40 is higher than that when the pulse width of the output light is decreased. However, when the pulsed light is amplified by the amplification optical fiber having the active element added thereto, light with a small pulse width tends to be amplified into light with low peak intensity. From this point, in this operation, the amplification pumping light source 30 is controlled such that, as the pulse width of the output light increases, that is, as the period for which the optical switch 23 is turned off becomes shorter and the seed light has a larger pulse width, the intensity of the amplification pumping light increases, as described above, and the level of the pumped state of the active element in the amplification optical fiber 40 increases. Therefore, in the amplification optical fiber 40, as the pulse width of the seed light increases in order to increase the pulse width of the output light, the level of the pumped state of the active element in the amplification optical fiber 40 increases and light with a large pulse width is more likely to be amplified into light with low peak intensity. It is possible to suppress a change in the peak intensity of the output light emitted from the amplification optical fiber 40 due to the pulse width of the seed light. Then, output light with a pulse width corresponding to the pulse width of the seed light is emitted from the amplification optical fiber 40.

The control unit 70 may have data related to the intensity and time of the amplification pumping light emitted from the amplification pumping light source 30 and the peak intensity of the output light corresponding to the pulse width of the seed light, in order to suppress a change in the peak intensity of the output light due to a difference in the pulse width of the seed light such that the peak intensity of the output light emitted from the amplification optical fiber 40 is constant. Then, the intensity of the amplification pumping light emitted from the amplification pumping light source 30 may be determined on the basis of the data such that the peak intensity of the output light emitted from the amplification optical fiber 40 is constant.

In this way, the output light whose pulse width has been controlled is emitted from the fiber laser device 1.

As described above, according to the fiber laser device 1 of this embodiment, the periods T3 and T4 for which the optical switch 23 of the seed light source is turned off are controlled to control the pumped state of the active element in the seed light generation optical fiber 20, thereby controlling the pulse width of the pulsed seed light. As such, the structure which controls the period for which the optical switch 23 is turned off makes it possible to more accurately control the pulse width of the seed light than the structure which controls the intensity of the seed light generation pumping light incident on the seed light generation optical fiber 20. Therefore, according to the fiber laser device 1 of this embodiment, it is possible to accurately control the pulse width of the seed light. The accurate control of the pulse width makes it possible to accurately control the pulse width of the emitted output light.

In the fiber laser device 1 according to this embodiment, the period from the time when the amplification pumping light is emitted to the time when the optical switch 23 is turned off is changed depending on the pulse width of the output light and the period from the time when the amplification pumping light is emitted to the time when the optical switch 23 is turned on again is constant. Therefore, it is possible to emit the output light substantially at a constant time, regardless of the pulse width of the output light.

The control unit 70 controls the amplification pumping light source 30 such that, as the period for which the optical switch 23 is turned off becomes shorter, the level of the pumped state of the active element in the amplification optical fiber 40 when the seed light is incident on the amplification optical fiber 40 increases. Therefore, it is possible to suppress a variation in the peak intensity of the output light due to the pulse width while accurately controlling the pulse width of the output light and to stabilize the peak intensity of the output light.

### <Another Operation for Controlling Pulse Width>

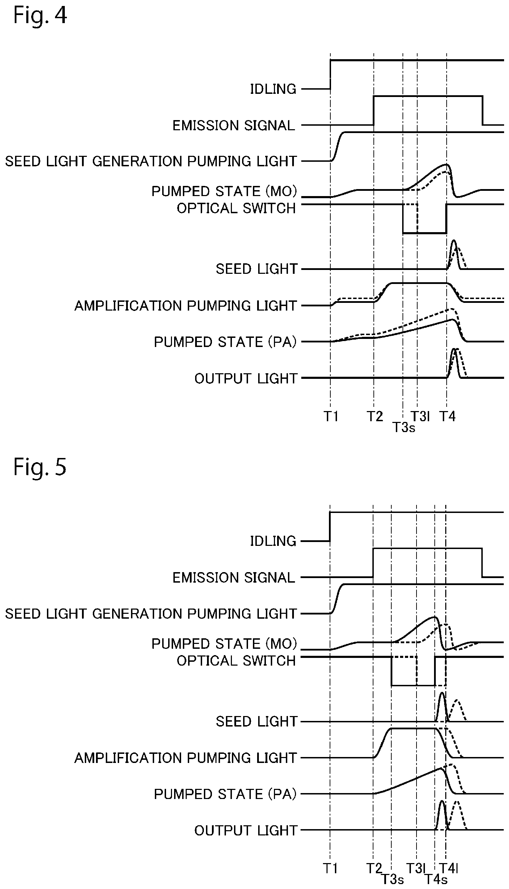

Next, another operation of the fiber laser device 1 controlling the pulse width of the emitted output light will be described with reference to the FIG. 4. In the invention, in some cases, the description of the same content as that described with reference to FIGS. 2 and 3 will not be repeated.

FIG. 4 is a diagram illustrating timing charts when the pulse width of the output light emitted from the fiber laser device 1 in this operation is large and when the pulse width is small, using the same method as that illustrated in FIG. 3.

In this operation, when the fiber laser device 1 is in the idling state, the amplification pumping light source 30 of the amplifier PA emits idling light which has the same wavelength as the amplification pumping light and has a lower intensity than the amplification pumping light. In other words, the amplification pumping light with low intensity is emitted as the idling light from the amplification pumping light source 30. The idling light is incident on the amplification optical fiber 40 and pumps the active element in the amplification optical fiber 40. However, when the idling light has low intensity, it is balanced with the ASE light which is generated in the amplification optical fiber 40 and the active element in the amplification optical fiber 40 is not changed to the pumped state which is high in which oscillation occurs. That is, the active element in the amplification optical fiber 40 is pre-pumped by the idling light.

In this operation, when the pulse width of the emitted output light is increased, the control unit 70 emits the idling light with a higher intensity than that when the pulse width of the output light is decreased. Therefore, when the pulse width of the output light is increased, the level of the pre-pumped state of the active element in the amplification optical fiber 40 is higher than that when the pulse width of the output light is decreased.

Then, at a time T2, in the control unit 70, when the emission signal is turned on, the amplification pumping light source 30 emits the amplification pumping light under the control of the control unit 70. In this case, the intensity of the emitted amplification pumping light is constant, regardless of the pulse width of the emitted output light. Then, the level of the pumped state of the active element in the amplification optical fiber 40 increases gradually. However, in a case in which the active element added to the amplification optical fiber is pumped by pumping light, when the active element has been pre-pumped at the time of the incidence of the pumping light, the level of the active element tends to be rapidly increased by the pumping light as it becomes higher at the time of the incidence of the pumping light. Therefore, in this operation, as described above, when the pulse width of the output light is increased, the level of the pre-pumped state of the active element in the amplification optical fiber 40 is higher than that when the pulse width of the output light is decreased. Therefore, even in a case in which the active element in the amplification optical fiber 40 is pumped by the amplification pumping light with the same intensity, when the pulse width of the output light is increased, the level of the pumped state of the active element in the amplification optical fiber 40 is more rapidly increased than that when the pulse width of the output light is decreased. That is, in the pumped state (PA) illustrated in FIG. 4, a pumped state represented by a dashed line in which the pulse width of the output light is increased has a steep gradient.

Similarly to the operation described with reference to FIG. 3, a time T31 at which the optical switch 23 is turned off when the pulse width of the output light is increased is later than a time T3s at which the optical switch 23 is turned off when the pulse width of the output light is decreased. The optical switch 23 is turned off according to each pulse width. Then, similarly to the operation described with reference to FIG. 3, the optical switch 23 is turned on at a time T4, regardless of the pulse width of the emitted output light. Seed light corresponding to the pulse width of the emitted output light is emitted and is incident on the amplification optical fiber 40 of the amplifier PA.

The pulsed seed light incident on the amplification optical fiber 40 is amplified and emitted. In this case, as the pulse width of the output light is increased, that is, as the period for which the optical switch 23 is turned off becomes shorter and the seed light has a larger pulse width, the level of the pumped state of the active element in the amplification optical fiber 40 is increased due to a difference in the pre-pumped state. Therefore, in this operation, similarly to the operation of the fiber laser device 1 described with reference to FIG. 3, it is possible to suppress a change in the peak intensity of the output light due to a difference in the pulse width of the seed light. Then, output light with a pulse width corresponding to the pulse width of the seed light is emitted from the amplification optical fiber 40.

The control unit 70 may have data related to the intensity and time of each of the idling light and the amplification pumping light emitted from the amplification pumping light source 30 and the peak intensity of the output light corresponding to the pulse width of the seed light, in order to suppress a change in the peak intensity of the output light due to a difference in the pulse width of the seed light such that the peak intensity of the output light emitted from the amplification optical fiber 40 is constant. Then, the intensity of the idling light and the amplification pumping light emitted from the amplification pumping light source 30 may be determined on the basis of the data such that the peak intensity of the output light emitted from the amplification optical fiber 40 is constant.

In this way, the output light whose pulse width has been controlled is emitted from the fiber laser device 1.

In some cases, amplification pumping light with the maximum intensity which can be emitted from the amplification pumping light source 30 is emitted from the amplification pumping light source 30 in order to emit output light with high intensity. In this case, the intensity of the amplification pumping light emitted from the amplification pumping light source 30 is constant, regardless of the pulse width of the output light emitted from the fiber laser device 1. However, according to the operation of the fiber laser device 1, even when the intensity of the amplification pumping light is constant, the control unit 70 can control the intensity of the idling light such that, as the pulse width of the seed light increases, the level of the pumped state of the active element in the amplification optical fiber 40 increases. Therefore, it is possible to suppress a change in the peak intensity of the output light.

### <Still Another Operation of Controlling Pulse Width>

Next, still another operation of the fiber laser device 1 controlling the pulse width of the emitted output light will be described with reference to the FIG. 5. In the invention, in some cases, the description of the same content as that described with reference to FIGS. 2 and 3 will not be repeated.

FIG. 5 is a diagram illustrating timing charts when the pulse width of the output light emitted from the fiber laser device 1 in this operation is large and when the pulse width is small, using the same method as that illustrated in FIG. 3.

In this operation, when the fiber laser device 1 is in the idling state and the control unit 70 turns on the emission signal at a time T2, the amplification pumping light source 30 emits amplification pumping light under control of the control unit 70. In this case, in this operation, the amplification pumping light which has constant intensity regardless of the pulse width of the output light is emitted. Therefore, in this operation, the level of the pumped state of the active element in the amplification optical fiber 40 increases so as to be constant regardless of the pulse width of the output light.

After a predetermined period of time has elapsed from the time T2, the control unit 70 turns off the optical switch 23 at different times when the pulse width of the output light is large and when the pulse width is small. In this operation, a time T31 at which the optical switch 23 is turned off when the pulse width of the output light is increased is later than a time T3s at which the optical switch 23 is turned off when the pulse width of the output light is decreased. However, in this operation, even in a case in which the period for which the optical switch 23 is turned off is short, when the pulse width of the output light is increased, the time T3s is delayed such that the time when the optical switch 23 is turned on is further delayed, in order to increase the pulse width of the seed light, which will be described below.

When the optical switch 23 is turned off, the level of the pumped state of the active element in the seed light generation optical fiber 20 is further increased. However, as described above, when the pulse width of the output light is increased, the time when the optical switch 23 is turned off is later than that when the pulse width of the output light is decreased. Therefore, when the pulse width of the output light is increased, the level of the pumped state of the active element in the seed light generation optical fiber 20 is lower than that when the pulse width of the output light is decreased.

When the pulse width of the output light is decreased, the optical switch 23 is turned on again at a time T4s. When the pulse width of the output light is increased, the optical switch 23 is turned on again at a time T41. The time T4s is earlier than the time T41. However, when the pulse width of the seed light is increased in order to increase the pulse width of the output light, the period for which the optical switch 23 is turned off is shorter than that when the pulse width of the seed light is decreased in order to decrease the pulse width of the output light. That is, the control unit 70 performs control such that the time T41 is later than the time T4s while the period from the time T31 to the time T41 is shorter than the period from the time T3s to the time T4s. When the optical switch 23 is turned on, the seed light is emitted, similarly to the description using FIG. 2. In this case, as the period for which the optical switch 23 is turned off becomes shorter, the pulse width of the emitted seed light increases.

The seed light emitted from the seed light source MO is incident on the amplifier PA from the incidence optical fiber 35 through the wavelength converter 61 and the optical filter 62. In this case, as illustrated in FIG. 5, as the seed light is incident on the amplifier PA at an earlier time, the level of the pumped state of the active element in the amplification optical fiber 40 is reduced. As the seed light is incident on the amplifier PA at a later time, the level of the pumped state of the active element in the amplification optical fiber 40 increases. Therefore, the seed light with a larger pulse width is incident on the amplification optical fiber 40 in which the level of the pumped state of the active element in the amplification optical fiber 40 is high rather than the seed light with a small pulse width.

The pulsed seed light incident on the amplification optical fiber 40 is amplified and is then emitted as the output light. In this operation, similarly to the description of the operation of the fiber laser device 1 using FIG. 3, it is possible to suppress a change in the peak intensity of the output light emitted from the amplification optical fiber 40 due to a difference in the pulse width of the seed light. Then, the output light with a pulse width corresponding to the pulse width of the seed light is emitted from the amplification optical fiber 40.

The control unit 70 may have data related to the intensity and time of the amplification pumping light emitted from the amplification pumping light source 30 and the peak intensity of the output light corresponding to the pulse width of the seed light, in order to suppress a change in the peak intensity of the output light due to a difference in the pulse width of the seed light such that the peak intensity of the output light emitted from the amplification optical fiber 40 is constant. Then, the times T3s and T31 when the optical switch 23 is turned off and the times T4s and T41 when the optical switch 23 is turned on may be determined on the basis of the data such that the peak intensity of the output light emitted from the amplification optical fiber 40 is constant.

The control unit 70 may perform control such that the optical switch 23 is turned off when the intensity of light detected by the light detection unit 50 is a predetermined value corresponding to the pulse width of the emitted seed light. In this operation, when the seed light with a large pulse width is emitted, the predetermined value is greater than that when the seed light with a small pulse width is emitted. Even in this control process, the description of the operation is matched with the description in which the time T31 at which the optical switch 23 is turned off when the seed light with a large pulse width is emitted is later than the time T3s at which the optical switch 23 is turned off when the seed light with a small pulse width is emitted. According to this control process, even when the level of the pumped state of the active element in the amplification optical fiber 40 is less likely to increase due to a certain cause, the seed light can be incident on the amplification optical fiber 40, with the active element in the amplification optical fiber 40 being in a desired pumped state. That is, it is possible to reduce the influence of a surrounding environment on the fiber laser device and to emit output light with desired peak intensity. In this control process, as described above, when the control unit 70 has data related to the intensity and time of the amplification pumping light emitted from the amplification pumping light source 30 and the peak intensity of the output light corresponding to the pulse width of the seed light, it is possible to accurately determine the above-mentioned predetermined value on the basis of the pulse width of the emitted seed light such that the peak intensity of the output light emitted from the amplification optical fiber 40 due to a difference in the pulse width of the seed light is constant.

In this way, the output light whose pulse width has been controlled is emitted from the fiber laser device 1.

According to the operation of the fiber laser device 1, even when the intensity of the amplification pumping light is constant, the delay time of the emitted seed light increases as the pulse width of the seed light increases. Therefore, it is possible to increase the level of the pumped state of the active element in the amplification optical fiber 40 and to suppress a change in the peak intensity of the output light emitted from the amplifier PA.

The embodiment of the invention has been described above as an example. However, the invention is not limited thereto.

For example, in the fiber laser device 1 according to the above-described embodiment, the wavelength converter 61 and the optical filter 62 may not be provided. However, it is preferable to provide the wavelength converter 61 and the optical filter 62 as in the above-described embodiment from the following point of view: it is possible to prevent continuous light from being incident between the pulsed seed light and the seed light incident on the amplifier PA; and the pumped state of the active element in the amplification optical fiber 40 is stabilized, regardless of the period for which the optical switch 23 is turned on or off, as compared to the case in which the wavelength converter 61 and the optical filter 62 are not provided.

In addition, the light detection unit 50 may not be provided. In this case, for example, information indicating the relationship between, for example, the pulse width of the seed light or the intensity of the amplification pumping light incident on the amplification optical fiber 40 and the peak intensity of the output light may be stored in the control unit 70 in advance and the control unit 70 may adjust the intensity of the amplification pumping light on the basis of the information. However, it is preferable that the light detection unit 50 be provided as in the above-described embodiment and the control unit 70 control the intensity of the amplification pumping light on the basis of the output of the light detection unit 50. In this case, it is possible to appropriately control the pumped state of the active element in the amplification optical fiber 40.

In the above-described embodiment, the pumped state of the amplification optical fiber 40 when the seed light is incident on the amplifier PA is changed depending on the pulse width of the emitted output light to suppress a variation in gain in the amplification optical fiber 40 due to the pulse width of the seed light. However, when the peak intensity of the output light of the fiber laser device 1 does not matter, the pumped state of the amplification optical fiber 40 may not be changed depending on the pulse width of the emitted output light.

In the above-described embodiment, the seed light source MO is a resonance-type fiber laser device. The seed light source MO is not particularly limited as long as it includes the optical switch 23 that switches between the transmission state and the non-transmission state of light with a specific wavelength propagated through the seed light generation optical fiber 20, the level of the active element in the seed light generation optical fiber 20 is increased when the optical switch 23 is in the non-transmission state, and pulsed seed light with a specific wavelength is emitted when the optical switch 23 is in the transmission state. Therefore, the seed light source MO may be, for example, a fiber-ring-type fiber laser device.

In the description of the operation using FIGS. 3 and 4, when the pulse width of the emitted output light is large, the time when the optical switch 23 is turned off is later than that when the pulse width is small and the time when the optical switch 23 is turned on is constant, regardless of the pulse width. That is, the time T3s is earlier than the time T31. However, preferably, when the pulse width of the emitted output light is large, the period for which the optical switch 23 is turned off is longer than that when the pulse width is small. Therefore, for example, the time when the optical switch 23 is turned off may be constant, regardless of the pulse width of the emitted output light. When the pulse width of the emitted output light is large, the time when the optical switch 23 is turned on may be earlier than that when the pulse width is small.

### Industrial Applicability

As described above, the invention provides a fiber laser device which can accurately control the pulse width of the emitted output light and is expected to be used in a field using laser light, such as a processing machinery field or a medical equipment field.

### Reference Signs List

- 1 ...: fiber laser device
- 10 ...: seed light generation pumping light source
- 18 ...: combiner
- 20 ...: seed light generation optical fiber
- 21 ...: first FBG (first mirror)
- 22 ...: second FBG (second mirror)
- 23 ...: optical switch
- 30 ...: amplification pumping light source
- 38 ...: combiner
- 40 ...: amplification optical fiber
- 50 ...: light detection unit
- 51 ...: light separation unit
- 52 ...: photoelectric conversion unit
- 61 ...: wavelength converter
- 62 ...: optical filter
- 70 ...: control unit
- 71 ...: light source control unit
- 72 ...: comparator
- MO ...: seed light source
- PA ...: amplifier

## Claims

1. A fiber laser device (1) comprising:
a seed light source (MO) that includes a seed light generation pumping light source (10) which is adapted to emit seed light generation pumping light, a seed light generation optical fiber (20) on which the seed light generation pumping light is incident and to which an active element that is pumped by the seed light generation pumping light is added, and an optical switch (23) which is optically coupled to the seed light generation optical fiber (20) and is adapted to switch between a transmission state and a non-transmission state of light with a specific wavelength that is propagated through the seed light generation optical fiber (20), wherein a level of a pumped state of the active element in the seed light generation optical fiber (20) is increased when the optical switch (23) is in the non-transmission state and pulsed seed light with the specific wavelength is emitted when the optical switch (23) is in the transmission state;
an amplifier (PA) that includes an amplification pumping light source (30) which is adapted to emit amplification pumping light and an amplification optical fiber (40) on which the seed light and the amplification pumping light are incident and to which an active element that is pumped by the amplification pumping light is added, wherein the amplifier is adapted to amplify the seed light; and
a control unit (70) that is adapted to control the seed light source (MO) and the amplifier (PA),
wherein the control unit (70) is adapted to instruct (T2) the amplification pumping light source (30) to emit the amplification pumping light in a state in which the seed light generation pumping light is emitted from the seed light generation pumping light source (10) and the optical switch (23) is in the transmission state,
wherein the control unit (70) is adapted to change (T3) the optical switch (23) from the transmission state to the non-transmission state, with the amplification pumping light being emitted from the amplification pumping light source (30), and change (T4) the optical switch (23) to the transmission state again so that the seed light is emitted,
wherein the control unit (70) is adapted to perform control such that, as a desired pulse width of output light emitted from the amplifier (PA) is reduced, a period (T3;T4) for which the optical switch (23) is in the non-transmission state becomes longer and the intensity of the amplification pumping light emitted from the amplification pumping light source (30) is controlled such that the output light has a predetermined peak intensity, and
wherein the control unit (70) is adapted to control the amplification pumping light source (30) such that, as the period (T3; T4) for which the optical switch (23) is in the non-transmission state becomes shorter, the level of the pumped state of the active element in the amplification optical fiber (40) when the seed light is incident on the amplification optical fiber (40) increases.

2. The fiber laser device (1) according to claim 1,
wherein the control unit (70) is adapted to change a period from a time when the amplification pumping light is emitted to a time when the optical switch (23) is changed to the non-transmission state, depending on the pulse width of the output light emitted from the amplifier (PA), and set a period from the time when the amplification pumping light is emitted to a time when the optical switch (23) is changed to the transmission state again to be constant.

3. The fiber laser device (1) according to claim 1,
wherein the control unit (70) is adapted to set a period from a time when the amplification pumping light is emitted to a time when the optical switch (23) is changed to the non-transmission state to be constant, and change a period from the time when the amplification pumping light is emitted to a time when the optical switch (23) is changed to the transmission state again, depending on the pulse width of the output light emitted from the amplifier (PA).

4. The fiber laser device (1) according to claim 1, wherein the control unit (70) is adapted to control the amplification pumping light source (30) such that, as the period for which the optical switch (23) is in the non-transmission state becomes shorter, the intensity of the amplification pumping light increases.

5. The fiber laser device (1) according to claim 1, wherein the control unit (70) is adapted to control the amplification pumping light source (30) such that idling light which has the same wavelength as the amplification pumping light, has a lower intensity than the amplification pumping light, and is incident on the amplification optical fiber (40) is emitted from the amplification pumping light source (30) before the amplification pumping light is emitted and the intensity of the idling light increases as the period for which the optical switch (23) is in the non-transmission state becomes shorter.

6. The fiber laser device (1) according to claim 1,
wherein the control unit (70) is adapted to lengthen a period from a time when the amplification pumping light is emitted to a time when the optical switch (23) is changed to the non-transmission state and lengthens a period from the time when the amplification pumping light is emitted to a time when the optical switch (23) is changed to the transmission state again such that, as the period for which the optical switch (23) is in the non-transmission state becomes shorter, the level of the pumped state of the active element in the amplification optical fiber (40) when the seed light is incident on the amplification optical fiber (40) increases.

7. The fiber laser device (1) according to any one of claims 1 to 6, further comprising:
a light detection unit (50) that is provided between the seed light source (MO) and the amplifier (PA) and detects the intensity of light which travels from the amplifier (PA) to the seed light source (MO),
wherein the control unit (70) controls the intensity of the amplification pumping light on the basis of the intensity of the light detected by the light detection unit (50) such that the active element in the amplification optical fiber (40) is in a desired pumped state when the seed light is incident on the amplification optical fiber (40).

8. The fiber laser device (1) according to claim 1, further comprising:
a light detection unit (50) that is provided between the seed light source (MO) and the amplifier (PA) and is adapted to detect the intensity of light which travels from the amplifier (PA) to the seed light source (MO),
wherein the control unit (70) is adapted to change the optical switch (23) to the non-transmission state when the intensity of the light detected by the light detection unit (50) has a predetermined value corresponding to the pulse width of the emitted seed light.

9. The fiber laser device (1) according to any one of claims 1 to 8, further comprising:
a wavelength converter (61) that is provided between the seed light source (MO) and the amplifier (PA), is adapted not to convert a wavelength of light emitted from the seed light source (MO) for a period for which the pulsed seed light is not emitted, and is adapted to convert a wavelength of the pulsed seed light for the period; and
an optical filter (62) that is provided between the wavelength converter (61) and the amplifier (PA), is adapted to transmit the light whose wavelength has been converted by the wavelength converter (61) among light components emitted from the seed light source (MO) and suppress the transmission of light whose wavelength has not been converted by the wavelength converter (61).

## Patentansprüche

1. Faserlaservorrichtung (1), aufweisend:
eine Saatlichtquelle (MO), die eine Saatlichterzeugungs-Pumplichtquelle (10), welche zum Aussenden von Saatlichterzeugungspumplicht eingerichtet ist, eine optische Faser zur Erzeugung von Saatlicht (20), auf die das Saatlichterzeugungspumplicht einfällt, und der ein aktives Element, das durch das Saatlichterzeugungspumplicht gepumpt wird, hinzugefügt ist, und einen optischen Schalter (23) enthält, der optisch an die optische Faser zur Erzeugung von Saatlicht (20) gekoppelt ist und zum Schalten zwischen einem Übertragungszustand und einem Nichtübertragungszustand von Licht mit einer spezifischen Wellenlänge eingerichtet ist, welches durch die optische Faser zur Erzeugung von Saatlicht (20) verbreitet wird, wobei ein Grad eines Pumpzustand des aktiven Elements in der optischen Faser zur Erzeugung von Saatlicht (20) erhöht wird, wenn der optische Schalter (23) im Nichtübertragungszustand ist, und gepulstes Saatlicht mit der spezifischen Wellenlänge ausgesendet wird, wenn der optische Schalter (23) im Übertragungszustand ist;
einen Verstärker (PA), der eine Verstärkungspumplichtquelle (30), welche zum Aussenden von Verstärkungspumplicht eingerichtet ist, und eine optische Faser zur Verstärkung (40) enthält, auf die das Saatlicht und das Verstärkungspumplicht einfallen, und der ein aktives Element, das durch das Verstärkungspumplicht gepumpt wird, hinzugefügt ist, wobei der Verstärker zum Verstärken des Saatlichts eingerichtet ist; und
eine Steuereinheit (70), die zum Steuern der Saatlichtquelle (MO) und des Verstärkers (PA) eingerichtet ist,
wobei die Steuereinheit (70) zum Anweisen (T2) der Verstärkungspumplichtquelle (30) zum Aussenden des Verstärkungslichts in einem Zustand, in dem das Saatlichterzeugungspumplicht von der Saatlichterzeugungs-Pumplichtquelle (10) ausgesendet wird und der optische Schalter (23) im Übertragungszustand ist, eingerichtet ist,
wobei die Steuereinheit (70) zum Umschalten (T3) des optischen Schalters (23) aus dem Übertragungszustand in den Nichtübertragungszustand, wobei das Verstärkungspumplicht von der Verstärkungspumplichtquelle (30) ausgesendet wird, und Umschalten (T4) des optischen Schalters (23) wieder in den Übertragungszustand eingerichtet ist, sodass das Saatlicht ausgesendet wird,
wobei die Steuereinheit (70) dazu eingerichtet ist, Steuerung derart auszuführen, dass, wenn eine erwünschte Pulsbreite von Ausgangslicht, das vom Verstärker (PA) ausgesendet wird, verringert wird, eine Periode (T3; T4), für die der optische Schalter (23) im Nichtübertragungszustand ist, länger wird, und die Intensität des Verstärkungspumplichts, das von der Verstärkungspumplichtquelle (30) ausgesendet wird, derart gesteuert wird, dass das Ausgangslicht eine vorbestimmte Spitzenintensität aufweist, und
wobei die Steuereinheit (70) dazu eingerichtet ist, die Verstärkungspumplichtquelle (30) derart zu steuern, dass, wenn die Periode (T3; T4), für die der optische Schalter (23) im Nichtübertragungszustand ist, kürzer wird, der Grad des Pumpzustands des aktiven Elements in der optische Faser zur Verstärkung (40), wenn das Saatlicht auf die optische Faser zur Verstärkung (40) einfällt, zunimmt.

2. Faserlaservorrichtung (1) nach Anspruch 1,
wobei die Steuereinheit (70) zum Ändern einer Periode von einer Zeit, wenn das Verstärkungspumplicht ausgesendet wird, zu einer Zeit, wenn der optische Schalter (23) in den Nichtübertragungszustand umgeschaltet wird, abhängig von der Pulsbreite des Ausgangslichts, das vom Verstärker (PA) ausgesendet wird, und Einstellen, dass eine Periode von der Zeit, wenn das Verstärkungspumplicht ausgesendet wird, zu einer Zeit, wenn der optische Schalter (23) zurück in den Übertragungszustand umgeschaltet wird, konstant ist, eingerichtet ist.

3. Faserlaservorrichtung (1) nach Anspruch 1,
wobei die Steuereinheit (70) zum Einstellen, dass eine Periode von einer Zeit, wenn das Verstärkungspumplicht ausgesendet wird, zu einer Zeit, wenn der optische Schalter (23) in den Nichtübertragungszustand umgeschaltet wird, konstant ist, und Ändern einer Periode von der Zeit, wenn das Verstärkungspumplicht ausgesendet wird, zu einer Zeit, wenn der optische Schalter (23) in den Übertragungszustand umgeschaltet wird, abhängig von der Pulsbreite des Ausgangslichts, das vom Verstärker (PA) ausgesendet wird, eingerichtet ist.

4. Faserlaservorrichtung (1) nach Anspruch 1,
wobei die Steuereinheit (70) zum derartigen Steuern der Verstärkungspumplichtquelle (30) eingerichtet ist, dass, wenn die Periode, für die der optische Schalter (23) im Nichtübertragungszustand ist, kürzer wird, die Intensität des Verstärkungspumplichts zunimmt.

5. Faserlaservorrichtung (1) nach Anspruch 1,
wobei die Steuereinheit (70) dazu eingerichtet ist, die Verstärkungspumplichtquelle (30) derart zu steuern, dass unbenutztes Licht, das dieselbe Wellenlänge wie das Verstärkungspumplicht aufweist, eine niedrigere Intensität wie das Verstärkungspumplicht aufweist und auf die optische Faser zur Verstärkung (40) einfällt, von der Verstärkungspumplichtquelle (30) ausgesendet wird, bevor das Verstärkungspumplicht ausgesendet wird, und die Intensität des unbenutzten Lichts zunimmt, wenn die Periode, für die der optische Schalter (23) im Nichtübertragungszustand ist, kürzer wird.

6. Faserlaservorrichtung (1) nach Anspruch 1,
wobei die Steuereinheit (70) dazu eingerichtet ist, eine Periode von einer Zeit, wenn das Verstärkungspumplicht ausgesendet wird, zu einer Zeit, wenn der optische Schalter (23) in den Nichtübertragungszustand umgeschaltet wird, zu verlängern, und verlängert eine Periode von der Zeit, wenn das Verstärkungspumplicht ausgesendet wird, zu einer Zeit, wenn der optische Schalter (23) wieder in den Übertragungszustand umgeschaltet wird, sodass, wenn die Periode, für die der optische Schalter (23) im Nichtübertragungszustand ist, kürzer wird, der Grad des Pumpzustands des aktiven Elements in der optische Faser zur Verstärkung (40), wenn das Saatlicht auf die optische Faser zur Verstärkung (40) einfällt, zunimmt.

7. Faserlaservorrichtung (1) nach einem der Ansprüche 1 bis 6, ferner aufweisend:
eine Lichterkennungseinheit (50), die zwischen der Saatlichtquelle (MO) und dem Verstärker (PA) vorgesehen ist und die Intensität von Licht erkennt, das vom Verstärker (PA) zur Saatlichtquelle (MO) wandert,
wobei die Steuereinheit (70) die Intensität des Verstärkungspumplichts auf der Grundlage der Intensität des Lichts, das durch die Lichterkennungseinheit (50) erkannt wird, derart steuert, dass das aktive Element in der optische Faser zur Verstärkung (40) in einem erwünschten Pumpzustand ist, wenn das Saatlicht auf die optische Faser zur Verstärkung (40) einfällt.

8. Faserlaservorrichtung (1) nach Anspruch 1, ferner aufweisend:
eine Lichterkennungseinheit (50), die zwischen der Saatlichtquelle (MO) und dem Verstärker (PA) vorgesehen ist und dazu eingerichtet ist, die Intensität von Licht zu erkennen, das vom Verstärker (PA) zur Saatlichtquelle (MO) wandert,
wobei die Steuereinheit (70) dazu eingerichtet ist, den optischen Schalter (23) in den Nichtübertragungszustand umzuschalten, wenn die Intensität des Lichts, das durch die Lichterkennungseinheit (50) erkannt wird, einen vorbestimmten Wert aufweist, der der Pulsbreite des ausgesendeten Saatlichts entspricht.

9. Faserlaservorrichtung (1) nach einem der Ansprüche 1 bis 8, ferner aufweisend:
einen Wellenlängenumformer (61), der zwischen der Saatlichtquelle (MO) und dem Verstärker (PA) vorgesehen ist, dazu eingerichtet ist, eine Wellenlänge von Licht, das von der Saatlichtquelle (MO) ausgesendet wird, für eine Periode, für die das gepulste Saatlicht nicht ausgesendet wird, nicht umzuformen, und dazu eingerichtet ist, eine Wellenlänge des gepulsten Saatlichts für die Periode umzuformen; und
ein optischer Filter (62), der zwischen dem Wellenlängenumformer (61) und dem Verstärker (PA) vorgesehen ist und zum Übertragen des Lichts, dessen Wellenlänge durch den Wellenlängenumformer (61) umgeformt wurde, unter Lichtkomponenten, die von der Saatlichtquelle (MO) ausgesendet werden, und Unterdrücken der Übertragung des Lichts, dessen Wellenlänge nicht durch den Wellenlängenumformer (61) umgeformt wurde, eingerichtet ist.

## Revendications

1. Dispositif laser à fibre (1), comprenant :
une source de lumière d'origine (MO) qui inclut une source de lumière de pompage de génération de lumière d'origine (10) qui est adaptée pour émettre de la lumière de pompage de génération de lumière d'origine, une fibre optique de génération de lumière d'origine (20) sur laquelle la lumière de pompage de génération de lumière d'origine est incidente et à laquelle un élément actif qui est pompé par la lumière de pompage de génération de lumière d'origine est ajouté, et un commutateur optique (23) qui est optiquement couplé à la fibre optique de génération de lumière d'origine (20) et est adapté pour commuter entre un état de transmission et un état de non-transmission de lumière avec une longueur d'onde spécifique qui se propage à travers la fibre optique de génération de lumière d'origine (20), dans lequel
un niveau d'un état pompé de l'élément actif dans la fibre optique de génération de lumière d'origine (20) est augmenté lorsque le commutateur optique (23) est dans l'état de non-transmission et de la lumière d'origine pulsée avec la longueur d'onde spécifique est émise lorsque le commutateur optique (23) est dans l'état de transmission ;
un amplificateur (PA) qui inclut une source de lumière de pompage d'amplification (30) qui est adaptée pour émettre de la lumière de pompage d'amplification et une fibre optique d'amplification (40) sur laquelle de la lumière d'origine et la lumière de pompage d'amplification sont incidentes et à laquelle un élément actif qui est pompé par la lumière de pompage d'amplification est ajouté, dans lequel l'amplificateur est adapté pour amplifier la lumière d'origine ; et
une unité de commande (70) qui est adaptée pour commander la source de lumière d'origine (MO) et l'amplificateur (PA),
dans lequel l'unité de commande (70) est adaptée pour donner l'instruction (T2) à la source de lumière de pompage d'amplification (30) d'émettre la lumière de pompage d'amplification dans un état où la lumière de pompage de génération de lumière d'origine est émise à partir de la source de lumière de pompage de génération de lumière d'origine (10) et le commutateur optique (23) est dans l'état de transmission,
dans lequel l'unité de commande (70) est adaptée pour changer (T3) le commutateur optique (23) de l'état de transmission à l'état de non-transmission, la lumière de pompage d'amplification étant émise à partir de la source de lumière de pompage d'amplification (30), et changer (T4) le commutateur optique (23) à l'état de transmission à nouveau pour que la lumière d'origine soit émise,
dans lequel l'unité de commande (70) est adaptée pour réaliser une commande de telle sorte que, lorsqu'une largeur d'impulsion souhaitée de lumière de sortie émise de l'amplificateur (PA) est réduite, une période (T3 ; T4) pendant laquelle le commutateur optique (23) est dans l'état de non-transmission devienne plus longue et l'intensité de la lumière de pompage d'amplification émise de la source de lumière de pompage d'amplification (30) est commandée de telle sorte que la lumière de sortie ait une intensité de crête prédéterminée, et
dans lequel l'unité de commande (70) est adaptée pour commander la source de lumière de pompage d'amplification (30) de telle sorte que, lorsque la période (T3 ; T4) pendant laquelle le commutateur optique (23) est dans l'état de non-transmission devient plus courte, le niveau de l'état pompé de l'élément actif dans la fibre optique d'amplification (40) lorsque la lumière d'origine est incidente sur la fibre optique d'amplification (40) augmente.

2. Dispositif laser à fibre (1) selon la revendication 1,
dans lequel l'unité de commande (70) est adaptée pour changer une période d'un instant auquel la lumière de pompage d'amplification est émise à un instant auquel le commutateur optique (23) est changé à l'état de non-transmission, en fonction de la largeur d'impulsion de la lumière de sortie émise de l'amplificateur (PA), et régler une période de l'instant auquel la lumière de pompage d'amplification est émise à un instant auquel le commutateur optique (23) est changé à l'état de transmission à nouveau pour être constante.

3. Dispositif laser à fibre (1) selon la revendication 1,
dans lequel l'unité de commande (70) est adaptée pour régler une période d'un instant auquel la lumière de pompage d'amplification est émise à un instant auquel le commutateur optique (23) est changé à l'état de non-transmission pour être constante, et changer une période de l'instant auquel la lumière de pompage d'amplification est émise à un instant auquel le commutateur optique (23) est changé à l'état de transmission à nouveau, en fonction de la largeur d'impulsion de la lumière de sortie émise de l'amplificateur (PA).

4. Dispositif laser à fibre (1) selon la revendication 1,
dans lequel l'unité de commande (70) est adaptée pour commander la source de lumière de pompage d'amplification (30) de telle sorte que, lorsque la période pendant laquelle le commutateur optique (23) est dans l'état de non-transmission devient plus courte, l'intensité de la lumière de pompage d'amplification augmente.

5. Dispositif laser à fibre (1) selon la revendication 1,
dans lequel l'unité de commande (70) est adaptée pour commander la source de lumière de pompage d'amplification (30) de telle sorte que de la lumière inactive qui a la même longueur d'onde que la lumière de pompage d'amplification, a une intensité inférieure à celle de la lumière de pompage d'amplification, et est incidente sur la fibre optique d'amplification (40) soit émise de la source de lumière de pompage d'amplification (30) avant que la lumière de pompage d'amplification soit émise et l'intensité de la lumière inactive augmente lorsque la période pendant laquelle le commutateur optique (23) est dans l'état de non-transmission devient plus courte.

6. Dispositif laser à fibre (1) selon la revendication 1,
dans lequel l'unité de commande (70) est adaptée pour rallonger une période d'un instant auquel la lumière de pompage d'amplification est émise à un instant auquel le commutateur optique (23) est changé à l'état de non-transmission et rallonge une période de l'instant auquel la lumière de pompage d'amplification est émise à un instant auquel le commutateur optique (23) est changé à l'état de transmission à nouveau de telle sorte que, lorsque la période pendant laquelle le commutateur optique (23) est dans l'état de non-transmission devient plus courte, le niveau de l'état pompé de l'élément actif dans la fibre optique d'amplification (40) lorsque la lumière d'origine est incidente sur la fibre optique d'amplification (40) augmente.

7. Dispositif laser à fibre (1) selon l'une quelconque des revendications 1 à 6, comprenant en outre :
une unité de détection de lumière (50) qui est prévue entre la source de lumière d'origine (MO) et l'amplificateur (PA) et détecte l'intensité de lumière qui se déplace de l'amplificateur (PA) à la source de lumière d'origine (MO),
dans lequel l'unité de commande (70) commande l'intensité de la lumière de pompage d'amplification sur la base de l'intensité de la lumière détectée par l'unité de détection de lumière (50) de telle sorte que l'élément actif dans la fibre optique d'amplification (40) soit dans un état pompé souhaité lorsque la lumière d'origine est incidente sur la fibre optique d'amplification (40).

8. Dispositif laser à fibre (1) selon la revendication 1, comprenant en outre :
une unité de détection de lumière (50) qui est prévue entre la source de lumière d'origine (MO) et l'amplificateur (PA) et est adaptée pour détecter l'intensité de lumière qui se déplace de l'amplificateur (PA) à la source de lumière d'origine (MO),
dans lequel l'unité de commande (70) est adaptée pour changer le commutateur optique (23) à l'état de non-transmission lorsque l'intensité de la lumière détectée par l'unité de détection de lumière (50) a une valeur prédéterminée correspondant à la largeur d'impulsion de la lumière d'origine émise.

9. Dispositif laser à fibre (1) selon l'une quelconque des revendications 1 à 8, comprenant en outre :
un convertisseur de longueur d'onde (61), qui est prévu entre la source de lumière d'origine (MO) et l'amplificateur (PA), est adapté pour ne pas convertir une longueur d'onde de lumière émise de la source de lumière d'origine (MO) pendant une période pendant laquelle la lumière d'origine pulsée n'est pas émise, et est adapté pour convertir une longueur d'onde de la lumière d'origine pulsée pendant la période ; et
un filtre optique (62), qui est prévu entre le convertisseur de longueur d'onde (61) et l'amplificateur (PA), est adapté pour transmettre la lumière dont la longueur d'onde a été convertie par le convertisseur de longueur d'onde (61) parmi des composants de lumière émis de la source de lumière d'origine (MO) et supprimer la transmission de lumière dont la longueur d'onde n'a pas été convertie par le convertisseur de longueur d'onde (61).
